(19) Europäisches Patentamt
European Patent Office
Office européen des brevets

(11) **EP 1 892 551 B1**

(12) **EUROPÄISCHE PATENTSCHRIFT**

(45) Veröffentlichungstag und Bekanntmachung des Hinweises auf die Patenterteilung:
**08.05.2013 Patentblatt 2013/19**

(51) Int Cl.:
*G02B 17/08* (2006.01)  *G02B 21/00* (2006.01)
*G02B 21/08* (2006.01)  *G02B 21/06* (2006.01)
*G01J 3/02* (2006.01)  *G02B 27/30* (2006.01)

(21) Anmeldenummer: **07022891.1**

(22) Anmeldetag: **06.09.2005**

(54) **Farblängsfehler verringerndes Optiksystem**

Chromatic aberration reducing optical system

Système optique à la réduction des aberrations chromatiques

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.10.2004 DE 102004052276**

(43) Veröffentlichungstag der Anmeldung:
**27.02.2008 Patentblatt 2008/09**

(62) Dokumentnummer(n) der früheren Anmeldung(en) nach Art. 76 EPÜ:
**05019365.5 / 1 653 268**

(73) Patentinhaber: **Carl Zeiss Microscopy GmbH**
**07745 Jena (DE)**

(72) Erfinder: **Winterot, Johannes**
**07745 Jena (DE)**

(74) Vertreter: **Geyer, Fehners & Partner**
**Patentanwälte**
**Perhamerstrasse 31**
**80687 München (DE)**

(56) Entgegenhaltungen:
EP-A- 1 024 388    DE-A1- 10 217 544
US-A- 4 704 010    US-A- 5 303 001
US-A1- 2003 165 024

EP 1 892 551 B1

**Beschreibung**

Die Erfindung betrifft ein Optiksystem, insbesondere ein Mikroskop, mit einer Optikeinheit und einem Kollimator.

Ein solches Optiksystem ist beispielsweise ein Fluoreszenzkorrelationsspektroskop oder ein Laserscanningmikroskop. Bei einem Laserscanningmikroskop besteht häufig die Problematik, daß aufgrund der Farblängsfehlercharakteristik der Optikeinheit (des Objektivs) die. Anregung unerwünschterweise in verschiedenen Probentiefen erfolgt.

Aus der DE 102 17 544 A1 ist es bekannt, einen Kollimator mit mindestens zwei Linsen aus unterschiedlichen optischen Materialien aufzubauen, der dazu dient, den Farblängsfehler des Objektivs zu verringern. Da der Kollimator jedoch auch mindestens zwei Linsen aus unterschiedlichen optischen Materialien aufgebaut ist, ist seine Herstellung aufwendig und kostenintensiv.

Das Dokument US 5 303 001 offenbart ein Optiksystem mit einer Optikeinheit und einem Kollimator, der in einem Strahlengang des Optiksystems der Optikeinheit vorgeordnet ist, wobei die Optikeinheit einem dem Strahlengang zugeführten Strahlenbündel einen vorbestimmten Farblängsfehler einprägt und das Strahlenbündel auf den Kollimator als divergierendes Strahlenbündel trifft und von diesem in ein paralleles Strahlenbündel umgewandelt wird, wobei der Kollimator eine Linse sowie einen gekrümmten Spiegel aufweist, der den Strahlengang so faltet, dass das zugeführte Strahlenbündel die Linse zweimal durchläuft.

Ausgehend hiervon ist es Aufgabe der Erfindung, ein Optiksystem mit einer Optikeinheit und einem Kollimator bereitzustellen, mit dem die eingangs beschriebenen Nachteile überwunden werden können.

Erfindungsgemäß wird die Aufgabe gelöst durch ein Optiksystem, insbesondere ein Mikroskop, gemäß Anspruch 1. Damit läßt sich kostengünstig ein Kollimator herstellen. Insbesondere kann die Farblängsfehlercharakteristik des Kollimators so ausgelegt sein, daß der durch die Optikeinheit dem Strahlenbündel eingeprägte Farblängsfehler unverändert bleibt oder verringert wird.

Mit dem erfindungsgemäßen Optiksystem wird somit ein Kollimator bereitgestellt, der entweder ein divergierendes Strahlenbündel in ein paralleles Strahlenbündel oder paralleles Strahlenbündel in ein konvergierendes Strahlenbündel umwandelt und dabei dem umgewandelten Strahlenbündel entweder keinen Farblängsfehler oder einen solchen Farblängsfehler einprägt, der entgegen dem Farblängsfehler der Optikeinheit ist. Damit wird sichergestellt, daß der Kollimator den durch die Optikeinheit bedingten Farblängsfehler nicht verschlechtert. Bevorzugt wird durch den Kollimator der durch die Optikeinheit bedingte Farblängsfehler sogar verringert.

Der Kollimator des Optiksystems kann so ausgelegt werden, daß der durch den Kollimator bedingte Farblängsfehler monoton steigend (mit zunehmender Wellenlänge) oder auch monoton fallend (mit zunehmender Wellenlänge) ist. Dies wird z.B. allein dadurch erreicht, daß bei einem vorbestimmten Linsenmaterial die Linsenform geändert wird, wobei der Farblängsfehler monoton steigend ist, wenn die Linse als Zerstreuungslinse wirkt, und der Farblängsfehler monoton fallend ist, wenn die Linse als Sammellinse wirkt.

Das erfindungsgemäße Optiksystem kann insbesondere ein Laserscanningmikroskop oder ein Fluoreszenzkorrelationsspektroskop sein. Dabei kann der Kollimator dazu dienen, ein aus einer kleinen (punktförmigen) Lichtquelle kommendes Strahlenbündel zu parallelisieren. In diesem Fall ist der Kollimator in der Anregungsseite des Mikroskops angeordnet. Alternativ ist es möglich, den Kollimator im Detektionsstrahlengang einzusetzen, um ein paralleles Strahlenbündel auf einen Punkt zu konvergieren. In diesem Fall kann der Kollimator als Pinholeoptik eingesetzt werden.

Durch die Verwendung des gekrümmten Spiegels im Kollimator kann die Anzahl der benötigten Linsen verringert werden. Es ist bevorzugt, daß alle Linsen aus dem gleichen Material hergestellt sind.

Das zugeführte Strahlenbündel kann Strahlung (bevorzugt Licht) einer vorbestimmten Wellenlänge mit einer gewissen Bandbreite aufweisen. In diesem Fall ist der Kollimator bevorzugt für diesen Wellenlängenbereich in der erfindungsgemäßen Art ausgebildet. Es ist jedoch auch möglich, daß das zugeführte Strahlenbündel Licht mit zwei oder mehreren unterschiedlichen Wellenlängen bzw. Wellenlängenbereichen enthält, die sich nicht überlappen, sondern die voneinander beabstandet sind. In diesem Fall kann die Farblängsfehlercharakteristik des Kollimators auf die verschiedenen Wellenlängenbereiche relativ zueinander bezogen sein.

Der Spiegel ist insbesondere konkav gekrümmt. Damit läßt sich die gewünschte Umwandlung des divergierenden Strahlenbündels in das parallele Bündel bzw. des parallelen Bündels in ein konvergierendes Strahlenbündel besonders leicht realisieren.

Der Spiegel kann als Rückflächenspiegel auf einer Seite einer Linse ausgebildet sein. Dies bringt den Vorteil mit sich, daß der Spiegel nicht mehr relativ zur Linse justiert werden muß. Außerdem können typische Beläge für Rückflächenspiegel eingesetzt werden, und es wird eine Verschmutzung des Spiegels effektiv verhindert.

Der Kollimator des Optiksystems kann den Spiegel als einzigen Spiegel aufweisen. Damit läßt sich ein Kollimator mit der gewünschten Farblängsfehlercharakteristik mit einer äußerst geringen Anzahl von optischen Elementen realisieren.

Es ist bevorzugt, wenn beide Seiten einer Linse als sphärische Flächen ausgebildet sind. Auch der Spiegel kann ein sphärischer Spiegel sein. Dies führt zu einer deutlichen Verringerung der Herstellungskosten des Kollimators, da sphärische Flächen leicht mit der gewünschten Genauigkeit herstellbar sind.

Eine bevorzugte Ausgestaltung des erfindungsgemäßen Optiksystems besteht darin, daß das zugeführte Strahlenbündel derart auf die Kollimatoroptik einfällt, daß der Hauptstrahl des Strahlenbündels mit der optischen Achse des Kollimators zusammenfällt. Somit wird das einfallende Strahlenbündel in sich zurück reflektiert. In diesem Fall lassen sich unerwünschte Abbildungsfehler der Kollimatoroptik minimieren.

Des weiteren kann dem Kollimator im Strahlengang ein Umlenkspiegel mit einem Durchgangsloch vor- oder nachgeordnet sein, wobei das Strahlenbündel, wenn es ein divergierendes Strahlenbündel ist, durch das Durchgangsloch läuft und auf den Kollimator trifft und das vom Kollimator kommende parallele Strahlenbündel am Umlenkspiegel umgelenkt wird, und wobei das Strahlenbündel, wenn es ein paralleles Strahlenbündel ist, am Umlenkspiegel zum Kollimator hin umgelenkt wird und auf den Kollimator trifft, und das vom Kollimator kommende konvergierende Strahlenbündel durch das Durchgangsloch hindurchläuft.

Bei dieser Ausgestaltung läßt sich der senkrechte Einfall des zugeführten Strahlenbündels auf den Kollimator besonders leicht realisieren.

Ferner kann bei dem erfindungsgemäßen Optiksystem der Kollimator als ein erster austauschbarer Kollimator ausgebildet sein, der durch einen zweiten Kollimator des Optiksystems ersetzt werden kann, wobei der zweite Kollimator für einen anderen Wellenlängenbereich als der erste Kollimator eine derartige Farblängsfehlercharakteristik aufweist, daß für den anderen Wellenlängenbereich der durch die Optikeinheit eingeprägte Farblängsfehler unverändert bleibt oder verringert wird.

Diese Variante mit den austauschbaren Kollimatoren ist von besonderem Vorteil, wenn das Optiksystem zeitlich nacheinander mit Strahlenbündel von unterschiedlichen Wellenlängen genutzt wird.

Die Ausgestaltung des erfindungsgemäßen Optiksystems besteht darin, daß der Kollimator den Spiegel sowie zwei oder drei Linsen umfaßt und die Linsen sowie der Spiegel entlang der optischen Achse des Kollimators verschiebbar sind, so daß eine gewünschte Farblängsfehlercharakteristik des Kollimators einstellbar ist. Damit kann selbst im Betrieb des Optiksystems je nach Anforderung die Farblängsfehlercharakteristik des Kollimators geändert und angepaßt werden. Insbesondere ist diese Anpassung so durchführbar, daß andere optische Parameter unverändert bleiben. Beispielsweise kann der Kollimator so ausgebildet sein, daß er eine konstante Brennweite aufweist.

Bevorzugt sind alle Linsen aus dem gleichen Material hergestellt. Dies verringert die Herstellungskosten und führt zu einem günstigen und doch sehr flexiblen Kollimator.

Wenn das Optiksystem als Laserscanningmikroskop ausgebildet ist, kann es noch eine Ablenk- bzw. Scaneinheit aufweisen, die zwischen dem Kollimator und der Optikeinheit angeordnet ist.

Das Optiksystem kann bevorzugt so ausgebildet sein, daß die Optikeinheit selbst als weiterer Kollimator ausgebildet ist, der zumindest eine zweite Linse und einen zweiten gekrümmten Spiegel aufweist, der den Strahlengang so faltet, daß das zugeführte Strahlenbündel die zweite Linse zweimal durchläuft.

Insbesondere können die beiden Kollimatoren über einen Umlenkspiegel mit einem Durchgangsloch so gekoppelt sein, daß das zugeführte Strahlenbündel über den Umlenkspiegel auf den ersten oder den weiteren Kollimator gelenkt wird, von diesen in sich zurückreflektiert und auf das Durchgangsloch fokussiert wird, durch das Durchgangsloch hindurchläuft und auf den anderen der beiden Kollimatoren trifft, von diesen in sich zurückreflektiert und auf den Umlenkspiegel gelenkt und von diesem wiederum umgelenkt wird. Dadurch kann eine Vorrichtung zur Verringerung oder Erhöhung des Strahlquerschnitts, insbesondere paralleler Strahlenbündel, bereitgestellt werden, die auch gleichzeitig gewünschte Farblängsfehlercharakteristika aufweist.

Der weitere Kollimator kann in gleicher Weise wie der erste Kollimator in den oben beschriebenen bevorzugten Ausgestaltungen des erfindungsgemäßen Optiksystems weitergebildet werden.

Das Optiksystem kann als Laserscanningmikroskop oder als Fluoreszenzkorrelationsspektroskop ausgebildet sein, wobei der Kollimator im Anregungs- und/oder Detektionsstrahlengang angeordnet ist.

Die Erfindung wird nachfolgend anhand der Zeichnungen beispielshalber noch näher erläutert.

Es zeigen:

Fig. 1 eine schematische Ansicht eines Optiksystems;
Fig. 2 ein Diagramm zur Darstellung des Farblängsfehlers des Kollimators des Optiksystems von Fig. 1;
Fig. 3 ein Diagramm, das den Farblängsfehler des gesamten Optiksystems von Fig. 1 zeigt;
Fig. 4 einen Kollimator gemäß einer Ausführungsform des erfindungsgemäßen Optiksystems;
Fig. 5 ein Diagramm, aus dem die einzustellenden Linsen- und Spiegelpositionen für die gewünschte Farblängsfehlercharakteristik entnehmbar sind;
Fig. 6 einen Kollimator gemäß einer weiteren Ausführungsform;
Fig.7 ein Diagramm, aus die einzustellenden Linsenpositionen des Kollimators von Fig. 6 in Abhängigkeit der gewünschten Farblängsfehlercharakteristik entnehmbar sind, und
Fig. 8 eine weitere Ausführungsform des erfindungsgemäßen Optiksystems.

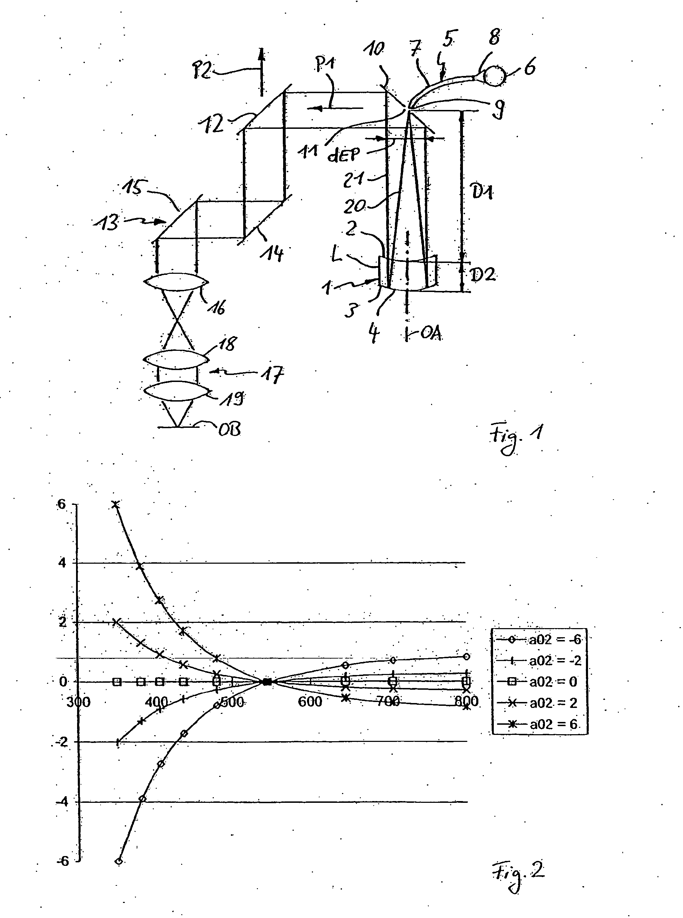

Bei den in Fig. 1 gezeigten Optiksystem ist das Optiksystem als Läserscanningmikroskop ausgebildet, das einen Kollimator 1 aufweist, der eine Einzellinse L mit einer konkaven Seite 2 und einer konvexen Seite 3 enthält, wobei die konvexe Seite 3 verspiegelt ist, so daß auf ihr ein Rückflächenspiegel 4 ausgebildet ist.

Das Laserscanningmikroskop enthält ferner eine Lichtquelle 5, die eine Lichtquelleneinheit 6 und eine Monomodefaser 7 umfaßt, wobei das Licht der Lichtquelleneinheit 6 über ein Ende der Monomodefaser 7 in diese eingekoppelt und an dem anderen Ende 9 ausgekoppelt wird. Das Ende 9 bildet somit eine Punktlichtquelle und ist so hinter einem Umlenkspiegel 10 angeordnet, daß es das Licht direkt in ein Durchgangsloch 11 des Umlenkspiegels 10 abgibt. Natürlich kann am Ort des Faseraustritts z.B. der Brennpunkt einer Fokusoptik (nicht gezeigt) sein.

Das Läserscanningmikroskop enthält ferner einen Hauptfarbteiler 12, eine Ablenkeinheit 13, die zwei Ablenkspiegel 14 und 15 sowie eine Scanneroptik 16 aufweist, und eine Mikroskopoptik 17, die eine Tubuslinse 18 und ein Objektiv 19 umfaßt. Statt der zwei Ablenkspiegel 14 und 15 kann die Ablenkeinheit 13 natürlich auch nur einen einzigen Ablenkspiegel (nicht gezeigt) enthalten, der z.B. um zwei Achsen schwenkbar ist.

Im Betrieb tritt aus dem Ende 9 der Faser 7 ein divergierendes Beleuchtungsstrahlenbündel 20 aus, wobei der Hauptstrahl des divergierenden Beleuchtungsstrahlenbündels 20 mit der optischen Achse OA des Kollimators (bzw. der Kollimationsoptik) 1 zusammenfällt, und trifft auf die Kollimationsoptik 1, die das Beleuchtungsstrahlenbündel 20 in ein Parallelbündel 21 umformt, das auf den Umlenkspiegel 10 trifft und von diesem zum Hauptfarbteiler 12 reflektiert wird, wie es durch den Pfeil P1 angedeutet ist. Das Parallelbündel 21 wird dann über den Hauptfarbteiler 12, die Ablenkeinheit 13 und die Mikroskopoptik 17 in bekannter Art auf das zu untersuchende Objekt OB fokussiert und bewegt, um beispielsweise Fluoreszenz anzuregen. Das Fluoreszenzlicht durchläuft die Mikroskopoptik 17, die Ablenkeinheit 13 und wird dann vom Hauptfärbteiler 12 in einen Detektionsstrahlengang geleitet, wie es durch den Pfeil P2 angedeutet ist. Im Detektionsstrahlengang wird das Fluoreszenzlicht in bekannter Weise analysiert.

Die Kollimationsoptik 1 ist so ausgelegt, daß ihr Farblängsfehler für das Licht der Lichtquelle 5 den Farblängsfehler der Mikroskopoptik 17 verringert. Bei dem Licht der .Lichtquelle 5 kann es sich beispielsweise um Licht mit der Wellenlänge 565 nm $\pm$ 15 nm handeln. In diesem Fall ist die Kollimationsoptik 1 für diesen Wellenlängenbereich so ausgelegt, daß der Farblängsfehler der Mikroskopoptik 17 in diesem Wellenlängenbereich verringert ist.

In Fig. 2 ist die Farblängsfehlerchäräktei-istik für fünf Varianten der Kollimationsoptik 1 dargestellt. Entlang der Abszisse ist die Wellenlänge $\lambda$ in nm und entlang der Ordinate ist der Farblängsfehler a02($\lambda$) als Wellenflächendeformation in Teilen von $\lambda$ dargestellt, wobei mit s($\lambda$) = 1,1 * $\lambda$ * a02(X)/nA$^2$ die physikalische Schnittweite berechenbar ist. $\Delta$ s = s($\lambda$)- s(546 nm) beschreibt eine Schnittweitendifferenz für die Wellenlänge $\lambda$, und nA ist die numerische Apertur, die hier als $\frac{1}{2} \cdot \frac{dEP}{f}$ definiert ist (dEP ist der Durchmesser der Eintrittspupille, hier dEP = 3,2 mm, und f ist die Brennweite des Kollimators). Der Wert von a02($\lambda$) für $\lambda$ = 350 nm wird hier einfach als a02 bezeichnet und dient als Parameter zur Unterscheidung von unterschiedlichen Farblängsfehlercharakteristiken des Kollimators.

Die Linie a02 = -2 zeigt die Farblängsfehlercharakteristik des Kollimators 1 von Fig. 1, der als rückflächenverspiegelte Einzellinse mit folgenden Parametern ausgebildet ist:

Krümmungsradius der konkaven Vorderseite 2: 54,13 mm
Krümmungsradius der konvexen Rückseite 3: 42,34 mm
Dicke D2 der Linse: 3,71 mm
Abstand D1 der vorderen Seite 2 von der Punktlichtquelle: 17,14 mm
Materialparameter: $n_e$ = 1,58481, $v_e$ = 40,57
Brennweite f: 20 mm

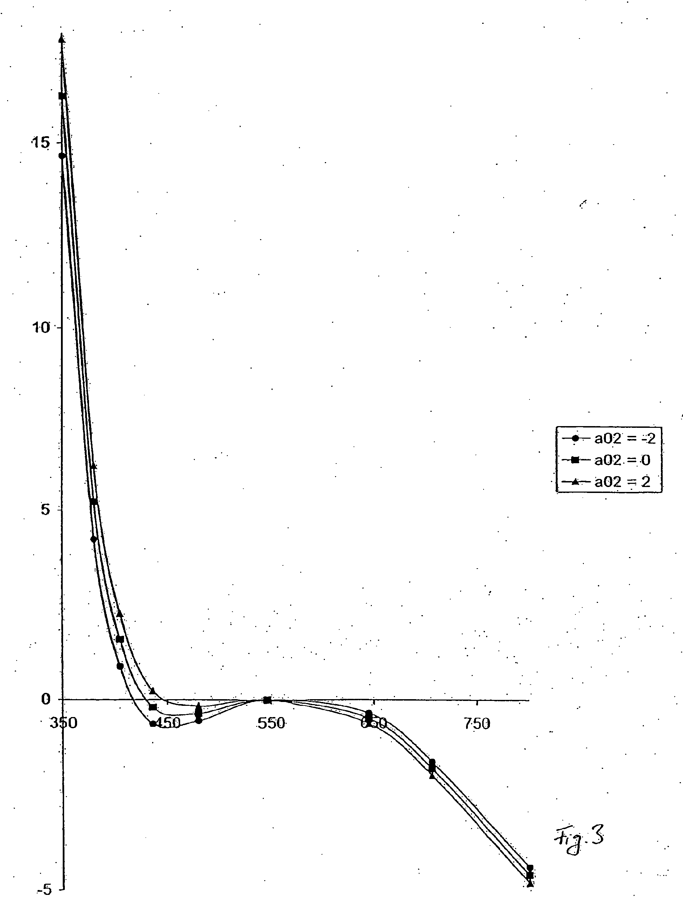

Die Farblängsfehlercharakteristik der Mikroskopoptik 17 (Kurve a02 = 0) alleine und in Kombination mit dem Kollimator 1 (Kurve a02 = -2) sind in Fig. 3 gezeigt, wobei hier wiederum entlang der Abszisse die Wellenlänge $\lambda$ in nm und entlang der Ordinate der Farblängsfehler a02($\lambda$) in mm aufgetragen ist.

Wie dem Vergleich der Kurven a02 = 0 und a02 = -2 in Fig. 3 zu entnehmen ist, ist der Farblängsfehler der Mikroskopoptik 17 im Bereich von größer als 550 nm monoton fallend (Kurve a02 = 0 in Fig. 3) und kann daher durch den in diesem Bereich entgegengesetzt verlaufenden Farblängsfehler des Kollimators 1 (Kurve a02 = -2. in Fig. 2) ausgezeichnet kompensiert werden (Kurve a02 = -2 in Fig. 3). Der Farblängsfehler im Bereich von 550 bis 600 nm ist praktisch 0 und somit fast vollständig, aufgehoben. Das Laserscanningmikroskop ist daher in diesem Wellenlängenbereich auf der Anregungsseite achromatisiert. Ferner ist der Farblängsfehler im Bereich von 600 bis 650 nm maximal nur noch halb so groß im Vergleich zur Farblängsfehlercharakteristik der Mikroskopoptik 17 alleine (Kurve a02 = 0).

In Fig. 2 ist noch die Farblängsfehlerchäräkteristik von Abwandlungen des Kollimators von Fig. 1 eingezeichnet, wobei jedoch der grundsätzliche Aufbau als rückflächenverspiegelte Konkav-Konvex-Einzellinse beibehalten wird und auch das gleiche Linsenmaterial eingesetzt wird. Lediglich die Krümmungsradien sowie die Linsendicke und der Abstand D1 sind variiert.

In der nachfolgenden Tabelle sind die entsprechenden Krümmungsradien und Abstände angegeben, wobei die Brennweite f des Kollimators 1 von Fig. 1 sowie die der Abwandlungen gemäß der nachfolgenden Tabelle jeweils 20 mm beträgt

| Kurve a02 = | Krümmungsradius Vorderseite 2 [mm] | Krümmungsradius Rückseite 3 [mm] | D2 [mm] | D1 [mm] |
|---|---|---|---|---|
| -6 | 177,95 | 56,89 | 3,74 | 17,66 |
| 0 | 40,21 | 42,34 | 3,71 | 17,74 |
| +2 | 31,98 | 39,31 | 4,00 | 17,59 |
| +6 | 22,66 | 34,29 | 4,05 | 17,60 |

Wie der Darstellung in Fig. 2 klar zu entnehmen ist, läßt sich somit die Farblängsfehlercharakteristik von monoton fallend mit zunehmender Wellenlänge (a02 = 6 oder 2) über unabhängig von der Wellenlänge (a02 = 0) bis zu monoton steigend mit zunehmender Wellenlänge (a02 = -6 oder -2) nur durch die Wahl der Krümmungsradien und Abstände, bzw. nur durch Änderung der geometrischen Abmessungen, ohne das Material zu ändern, einstellen: Dadurch kann die gewünschte optimale Korrektur der Mikroskopoptik 17 für den entsprechenden Anwendungsfall (also für die entsprechenden Wellenlängen) eingestellt werden.

In Fig. 3 ist noch die Farblängsfehlercharakteristik der Mikroskopoptik 17 in Verbindung mit einem Kollimator 1 mit a02 = 2 gezeigt. In diesem Fall wird eine ausgezeichnete Verringerung des Farblängsfehlers im Wellenlängenbereich von 450 - 550 nm erzielt.

Der Kollimator 1 von Fig. 1 sowie die in Fig. 2 gezeigten Abwandlungen genügen alle der folgenden Bedingung:

$$\left| 1/R2 - (a02*(b2/f^2+b1/f+b0)+c2/f^2+c1/f+c0) \right| < 0,0003$$

Dabei steht R2 für den Krümmungsradius der Rückseite 3 und f für die Brennweite des Kollimators 1; und die Konstanten c0, c1, c2, b0, b1, b2 weisen folgende Werte auf:

$$b0 = -0,0010395 \quad c0 = 0,00068469$$
$$b1 = -0,003737 \quad c1 = -0,570058$$
$$b2 = 0,0844626 \quad c2 = 1,679172$$

Aus der obigen Bedingung kann R2 und damit der Krümmungsradius des Spiegels 4 festgelegt werden. Der Kollimator kann mit unterschiedlichen Brennweiten ausgelegt werden Es können Brennweiten eingestellt werden, die die folgende Ungleichung erfüllen: 0,002<1/f<0,1.

Die obige Bedingung kann aus der numerischen Analyse des designten Kollimators bzw. Optiksystems in Abhängigkeit vorgegebener Randbedingungen (z.B. Brennweite des Kollimators, Linsenmaterial, ...) hergeleitet werden.

Ferner ist es beim Optiksystem möglich, den Abstand D1 zu ändern. Dies kann insbesondere dadurch durchgeführt werden, daß die Kollimationsoptik 1 entlang der optischen Achse OA bewegt wird. Eine Vergrößerung des Abstandes D1 bewirkt in dem Diagramm von Fig. 2 eine Verschiebung der entsprechenden Kurve entlang der Ordinate hin zu kleineren Werten. Entsprechend führt eine Verkleinerung des Abstands D1 zu einer Verschiebung der Kurve nach oben.

Natürlich ist es auch möglich, den Spiegel 4 als separaten Spiegel auszubilden. Auch kann die Kollimationsoptik 1 ein Gitter aufweisen, das beispielsweise auf der vorderen Seite 2, der hinteren Seite 3 oder auf der Spiegelfläche 4 ausgebildet ist.

Wenn beim Optiksystem das zugeführte Licht unterschiedliche Wellenlängenbereiche enthält (z.B. 500 nm $\pm$ 15 nm und 430 nm + 15 nm), kann die Kollimatoroptik 1 so ausgebildet sein, daß ihr Farblängsfehler bezüglich der beiden Wellenlängenbereiche den entsprechenden Farblängsfehler der Mikroskopoptik kompensiert oder zumindest verringert.

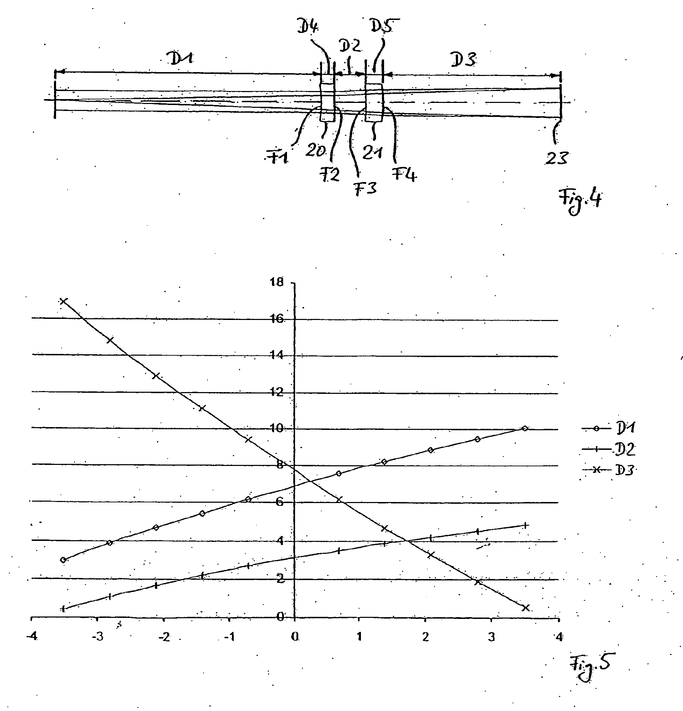

In Fig. 4 ist eine Abwandlung des Kollimators 1 gemäß der Erfindung eingezeichnet. Bei dieser Ausführungsform umfaßt der Kollimator 1 zwei Konkav-Konvex-Linsen 20, 21 sowie einen Konkavspiegel 23. Die Linsen 20 und 21 sowie der Spiegel 23 sind entlang der optischen Achse bewegbar, so daß deren Abstände veränderbar sind. Dadurch läßt sich beispielsweise bei konstanter Brennweite f des Kollimators 1 in Fig. 4 der Farblängsfehler des Optiksystems (also von Mikroskopoptik 17 und Kollimator 1) von unterkompensiert (der Farblängsfehler der Mikroskopoptik 17 wird nicht vollständig kompensiert) kontinuierlich bis zu überkompensiert (der Farblängsfehler des Kollimators 1 ist so groß, daß der Farblängsfehler der Mikroskopöptik 17 zwar kompensiert wird, aber nun das Optiksystem einen durch den Kollimator 1 bedingten Farblängsfehler aufweist) durchstimmen.

In der Ausführungsform in Fig. 4 sind die Linsen 20 und 21 aus dem gleichen Material und weisen eine Abbezahl von 36,16 auf. Der Abstand von der Eintrittspupille des Kollimators 1 bis zur konkaven Seite der Linse 20 beträgt D1, der Abstand zwischen den beiden einander zugewandten Seiten der Linsen 20 und 21 beträgt D2 und der Abstand von der konvexen Seite der Linse 21 zum Spiegel 23 beträgt D3. Die Dicke der Linsen 20 und 21 beträgt D4 und D5. Die Brennweite f beträgt 20 mm. Für diesen Fall lassen sich die Krümmung des Spiegels 23, die Brechkraft der Linsen 20 und 21 und die Bewegungsdynamik (also die Variation der Abstände D1, D2 und D3) als Funktion der Brennweite des Systems wie folgt beschreiben, wobei durch Wahl von zwei der drei Abstände D1, D2 und D3 die Fokussierung und Einstellung der Brennweite bewirkt wird und mittels der Wahl der Größe des dritten Abstands (hier D3) die Farblängsfehlercharakteristik festgelegt werden kann:

$$\left| 1/R + 0{,}4088/f + 0{,}0023 \right| < 0{,}001$$

$$\left| f1 + 0{,}0669 * f + 28{,}788 \right| < 0{,}05 * f$$

$$\left| f2 - 0{,}0271 * f - 57{,}22 \right| < 0{,}05 * f$$

$$\left| D3(\Delta s(=0)) - D3(\Delta s(<0)) - 0{,}4179 * f + 1{,}4475 \right| < 0{,}02 * f$$

$$\left| D3(\Delta s(>0)) - D3(\Delta s(<0)) - 0{,}731 * f - 2{,}867 \right| < 0{,}02 * f$$

R ist der Krümmungsradius des Spiegels 23, und f1 sowie f2 sind die Brennweiten der Linsen 20 bzw. 21. As(<0) steht für ein $\Delta s$, dessen Wert kleiner 0 ist. $\Delta s(=0)$ steht für ein $\Delta s$, dessen Wert 0 ist, und $\Delta s(>0)$ steht für ein $\Delta s$, dessen Wert größer als 0 ist. In dem hier beschriebenen Ausführungsbeispiel wird für $\Delta s(<0)$ ein Wert a02 von etwa -3,5 und für $\Delta s(>0)$ ein Wert a02 von etwa +3,5 erreicht.

Die genauen Parameter des Kollimators 1 von Fig. 4 sind wie folgt:
Krümmungsradius der konkaven Fläche F1: 13,10
Krümmungsradius der konvexen Fläche F2: 48,39
Krümmungsradius der konkaven Fläche F3: 18,44
Krümmungsradius der konvexen Fläche F4: 12,78
Krümmungsradius des konkaven Spiegels 23: 43,99
D4 = 2,00
D5 = 2,00.

|     | $\Delta s(<0)$ | $\Delta s(=0)$ | $\Delta s(>0)$ |
|-----|------|------|-------|
| D1  | 14,05 | 6,93 | 3,12 |
| D2  | 4,83 | 3,12 | 0,55 |
| D3  | 0,50 | 7,68 | 16,57 |

In der obigen Tabelle sind spezielle Werte für $\Delta s$ angegeben. In Fig. 5 ist die Abhängigkeit der Farblängsfehlercharakteristik von den Abständen D1, D2 und D3 graphisch so dargestellt, daß entlang der Abszisse der Wert für a02 angegeben ist und entlang der Ordinate die Größe des entsprechenden Abstandes in mm angegeben ist. Jedem einzelnen Wert des Parameters a02 sind wiederum Farbtängsfehtercharäkteristiken zugeordnet; die hier zwar nicht gezeigt sind, aber qualitativ den in Fig. 2 dargestellten entsprechen. Somit kann man in Abhängigkeit der gewünschten Farblängsfehlercharakteristik aus der Darstellung von Fig. 5 dann die einzustellenden Abstände D1-D3 entnehmen. Für die Werte a02 von -3,5, 3,5 und 0 sind die entsprechenden Abstände in der obigen Tabelle angegeben.

Der Kollimator 4 kann für Brennweiten f ausgelegt werden, die die folgende Ungleichung erfüllen: 0,002<1/f<0,1. Die Abbezahl der Linsen 20 und 21. sind bevorzugt kleiner als 60, vorzugsweise kleiner als 40. Insgesamt weist der Kollimator 1 von Fig. 4 eine Linse 20 negativer Brechkraft und einer niedrigen Abbezahl, eine Linse 21 positiver Brechkraft und ebenfalls niedriger Abbezahl sowie einen Spiegel 23 positiver Brechkraft auf. Durch Einstellen der Abstände D1-D3 kann die gewünschte Farblängsfehlercharakteristik eingestellt und verändert werden, wobei die Brennweite des Gesamtsystems konstant bleibt.

Insbesondere kann der Kollimator 1 von Fig. 4 noch Stellelemente für die Linsen 20 und 21 und den Spiegel 23 umfassen, so daß die Änderung der Farblängsfehlercharakteristik automatisch durchführbar ist.

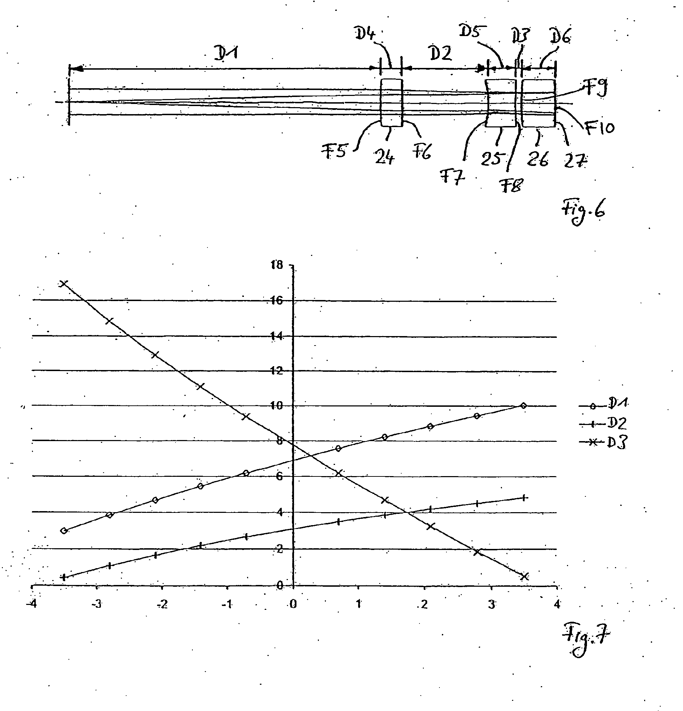

In Fig. 6 ist ein Kollimator 1 gezeigt, der eine Linse 24 positiver Brechkraft, eine Linse 25 negativer Brechkraft und einer Spiegellinse 26 positiver Brechkraft aufweist. Die Linsen weisen jeweils eine niedrige Abbezahl auf, beispielsweise kleiner als 60, vorzugsweise kleiner als 40. In dem hier beschriebenen konkreten Ausführungsbeispiel beträgt die Abbezahl 36,16. Auch der Kollimator in Fig. 6 ist so ausgelegt, daß bei konstanter Brennweite des Gesamtsystems sich der Farblängsfehler von überkorrigiert bis zu unterkorrigiert kontinuierlich durchstimmen läßt. Der Abstand der Eintrittspupille bis zur Fläche F5 der Linse 25 beträgt D1, der Abstand der einander zugewandten Flächen F6 und F7 der Linsen 24 und 25 beträgt D2 und der Abstand der Flächen F8 und F9 der Linsen 25 und 26 beträgt D3. Die Linsen 24, 25 und 26 weisen eine Dicke D4, D5 bzw. D6 auf.

Der Kollimator von Fig. 6 ist so ausgelegt, daß folgende Bedingungen erfüllt sind:

$$\left| 1/R6 + 0{,}31437/f + 0{,}0088 \right| < 0{,}001$$

$$\left| f1 - 0{,}1175 * f - 45{,}775 \right| < 0{,}1 * f$$

$$\left| f2 + 0{,}0133 * f + 14{,}621 \right| < 0{,}1 * f$$

$$\left| f3 - 0{,}0286 * f - 9{,}6999 \right| < 0{,}1 * f$$

$$\left| D2(\Delta s(=0)) - D2(\Delta s(<0)) - 0{,}0004 * f^2 + 0{,}2172 * f - 1{,}6243 \right| < 0{,}01 * f$$

$$\left| D2(\Delta s(>0)) - D2(\Delta s(<0)) - 0{,}0011 * f^2 + 0{,}4239 * f - 2{,}7441 \right| < 0{,}01 * f$$

Auch in diesem Ausführungsbeispiel wird für $\Delta s(<0)$ ein Wert- a02 von etwa -3,5 und für $\Delta s(>0)$ ein Wert a02 von etwa 3,5 erreicht. Die genauen Krümmungen der Linsenflächen sind wie folgt:

Krümmungsradius der konvexen Fläche F5: 71,76 mm,
Krümmungsradius der konkaven Fläche F6: 51,07 mm,
Krümmungsradius der konkaven Fläche F7: 8,90 mm,
Krümmungsradius der konkaven Fläche F8: 254,88 mm,
Krümmungsradius der konvexen Fläche F9: 49,08 mm,
Krümmungsradius der konvexen Fläche F10: 40,94 mm,
D4 = 2,00,
D5 = 5,52 und
D6 = 4,00.

|  | $\Delta s(<0)$ | $\Delta s(=0)$ | $\Delta s(>0)$ |
|---|---|---|---|
| D1 | 4,50 | 8,91 | 12,95 |
| D2 | 5,51 | 3,10 | 0,61 |

(fortgesetzt)

|    | $\Delta s(<0)$ | $\Delta s(=0)$ | $\Delta s(>0)$ |
|----|------|------|------|
| D3 | 2,22 | 1,51 | 0,88 |

Die Abhängigkeit der Farbängsfehlercharakteristik von den einzelnen Abständen D1-D3 ist in der Graphik von Fig. 7 dargestellt, wobei die Darstellung der von Fig. 5 entspricht. Für einen gewünschten Farblängsfehler a02 kann man anhand der Darstellung von Fig. 7 die Abstände D1-D3 ermitteln.

Von besonderem Vorteil ist bei den beschriebenen Ausführungsformen, daß alle gekrümmten Linsen- bzw. Spiegelflächen als sphärische Flächen ausgebildet werden können.

Die für die Ausführungsformen von Fig. 4 und 6 angegebenen Bedingungen sind für einen Fachmann durch numerische Analysen von Berechnungen der optischen Eigenschaften der jeweiligen Kollimatoren herleitbar.

Der Lichtweg in den obigen Kollimatoren ist umkehrbar, so daß ein aus der Fokusebene (hier z.B. Durchgangsloch 11 im Umlenkspiegel 10) austretendes, divergierendes Lichtbündel durch den Kollimator in ein paralleles Lichtbündel umgewandelt und ein paralleles Lichtbündel in ein konvergierendes Lichtbündel umgewandelt wird, das in die Fokusebene fokussiert wird.

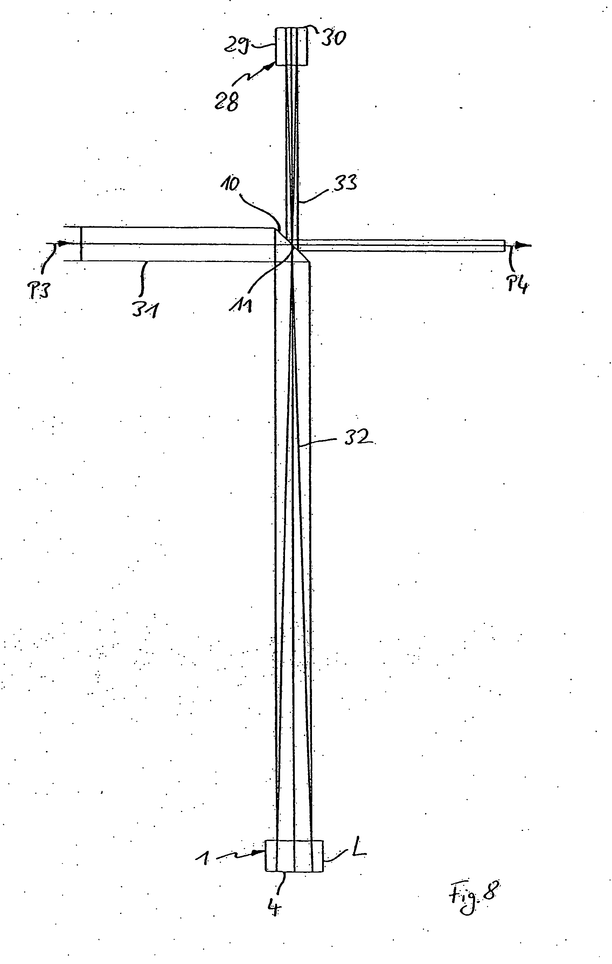

In Fig. 8 ist eine alternative Ausführungsform des erfindungsgemäßen Optiksystems gezeigt, bei der zwei Kollimatoren 1 und 28 über einen Umlenkspiegel 10 so hintereinander geschaltet sind, daß sie als Vorrichtung zur Aufweitung oder Verringerung des Strahlquerschnitts eines parallelen Strahlenbündels wirken. Dazu ist der erste Kollimator 1 beispielsweise in gleicher Weise wie bei den Optiksystem von Fig. 1 ausgebildet, gemäß der Erfindung ist der erste Kollimator jedoch in gleicher Weise wie bei einer der Ausführungsformen von Fig. 4 und Fig. 6 ausgebildet und es ist auch wiederum der Spiegel 10 mit dem Durchgangsloch 11 vorgesehen, wobei hier beide Seiten des Spiegels 10 verspiegelt sind.

Dem Spiegel 10 nachgeordnet (also in der Darstellung von Fig. 8 oberhalb des Spiegels) ist der zweite Kollimator 28 mit einer zweiten rückflächenverspiegelten Linse 29, auf deren Rückseite eine gekrümmte Spiegelfläche 30 ausgebildet ist. Die Abstände der beiden Linsen L und 29 vom Umlenkspiegel sowie die Abmessungen der Linsen L, 29 sind so gewählt, daß ein paralleles Strahlenbündel 31, das sich entlang der Richtung des Pfeiles P3 ausbreitet, vom Umlenkspiegel 10 nach unten in Richtung auf die Linse L umgelenkt wird. Nach Reflexion des Strahlenbündels 31 durch den Kollimator 1 wird es in ein konvergierendes Strahlenbündel 32 umgewandelt, das auf das Durchgangsloch 11 fokussiert ist (d.h. im Bereich des Durchgangsloches 11 weist das Strahlenbündel 32 seinen kleinsten Strahlquerschnitt auf).

Das durch das Durchgangsloch 11 hindurchgelaufene Strahlenbündel 32 ist hinter dem Spiegel 10 dann ein divergierendes Strahlenbündel, das vom Kollimator 28 in sich zurück reflektiert wird und dabei in ein paralleles Strahlenbündel 33 umgewandelt wird, das auf den Spiegel 10 trifft und von diesem nach rechts (in Richtung des Pfeiles P4 umgelenkt wird). Die Ausbreitungsrichtungen- P3 und P4 fallen hier so zusammen, daß die Hauptstrahlen der Strahlenbündel 31 und 33 auf einer gemeinsamen Achse liegen. Das Strahlenbündel 33 unterscheidet sich von dem Strahlenbündel 31 dadurch, daß der Strahlquerschnitt geringer ist. Somit wirkt das Optiksystem von Fig. 8 als Vorrichtung zur Verringerung des Strahlquerschnitts, und natürlich kann die Vorrichtung auch entgegengesetzt durchlaufen werden. In diesem Fall ist sie dann ein Strahlaufweiter.

Die beiden Kollimatoren 1 und 28 können natürlich so weiter- bzw. ausgebildet werden, wie dies in Verbindung mit Fig. 4 bis 7 beschrieben wurde. Insbesondere können die Linsen L und 29 aus dem gleichen Material gebildet sein.

**Patentansprüche**

1. Optiksystem, insbesondere Mikroskop, mit einer Optikeinheit (17) und einem Kollimator (1), der in einem Strahlengang des Optiksystems der Optikeinheit (17) vor- oder nachgeordnet ist, wobei die Optikeinheit (17) einem dem Strahlengang zugeführten Strahlenbündel einen vorbestimmten Farblängsfehler einprägt und das Strahlenbündel auf den Kollimator (1) als divergierendes oder paralleles Strahlenbündel trifft und von diesem in ein paralleles oder konvergierendes Strahlenbündel umgewandelt wird, wobei der Kollimator (1) zumindest eine Linse sowie einen gekrümmten Spiegel (23, 27) aufweist, der den Strahlengang so faltet, daß das zugeführte Strahlenbündel die Linse zweimal durchläuft,

**dadurch gekennzeichnet, daß**

der Kollimator (1) den Spiegel (23; 27) sowie zwei oder drei Linsen (20, 21; 24, 25, 26) zur Einstellung einer gewünschten

Farblängsfehlercharakteristik des Kollimators (1) umfaßt, wobei die Linsen (20, 21; 24, 25, 26) sowie der Spiegel (23; 27) entlang der optischen Achse (OA) des Kollimators (1) verschiebbar sind, so daß die gewünschte Farblängsfehlercharakteristik des Kollimators (1) einstellbar ist.

2. Optiksystem nach Anspruch 1, bei dem folgende Bedingungen erfüllt sind:

$$|1/R6 + 0,3143/f + 0,0088| < 0,001$$

$$|f1 - 0,1175 * f - 45,775| < 0,1 * f$$

$$|f2 + 0,0133 * f + 14,621| < 0,1 * f$$

$$|f3 - 0,0286 * f - 9,6999| < 0,1 * f$$

$$|D2(\Delta s(= 0)) - D2(\Delta s(< 0)) - 0,0004 * f^2 + 0,2172 * f - 1,6243| < 0,01 * f$$

$$|D2(\Delta s(> 0)) - D2(\Delta s(< 0)) - 0,0011 * f^2 + 0,4239 * f - 2,7441| < 0,01 * f,$$

wobei R6 der Krümmungsradius des Spiegels (27) ist,
f1, f2 und f3 die Brennweiten der drei Linsen (24; 25, 26) sind,
f die Brennweite des Kollimators (1) ist,
D2 der Abstand der einander zugewandten Flächen der am weitesten vom Spiegel (27) entfernten Linsen (24, 25) des Kollimators (1) ist,
$\Delta s = s(\lambda) - s(546 \text{ mm})$ ist, wobei $s(\lambda)$ die physikalische Schnittweite ist und $\Delta s(<0)$ für ein $\Delta s$ steht dessen Wert kleiner 0 ist, $\Delta s(=0)$ für ein $\Delta s$ steht, dessen Wert 0 ist, und $\Delta s$ (>0) für ein $\Delta s$ steht dessen Wert größer 0 ist.

3. Optiksystem nach einem der obigen Ansprüche, **dadurch gekennzeichnet, daß** die Farblängsfehlercharakteristik des Kollimators (1) so ausgelegt ist, daß der durch die Optikeinheit (17) dem Strahlenbündel eingeprägte Farblängsfehler unverändert bleibt oder verringert wird.

4. Optiksystem nach einem der obigen Ansprüche, **dadurch gekennzeichnet, daß** der Spiegel (27) als Rückflächenspiegel auf einer Seite einer der Linsen (26) ausgebildet ist.

5. Optiksystem nach einem der obigen Ansprüche, **dadurch gekennzeichnet, daß** der Kollimator (1) den Spiegel (23, 27) als einzigen Spiegel aufweist.

6. Optiksystem nach einem der obigen Ansprüche, **dadurch gekennzeichnet, daß** beide Seiten einer der Linsen (L) als sphärische Flächen ausgebildet sind.

7. Optiksystem nach einem der obigen Ansprüche, **dadurch gekennzeichnet, daß** das Strahlenbündel (20) derart auf den Kollimator (1) fällt, daß der Hauptstrahl des Strahlenbündels (20) mit der optischen Achse (OA) des Kollimators (1) zusammenfällt.

8. Optiksystem nach Anspruch 7, **dadurch gekennzeichnet, daß** dem Kollimator (1) im Strahlengang ein Umenkspiegel (10) mit einem Durchgangsloch (11) vor- oder nachgeordnet ist, wobei das Strahlenbündel (20), wenn es ein divergierendes Strahlenbündel ist, durch das Durchgangsloch (11) läuft und auf den Kollimator (1) trifft und das vom Kollimator kommende Parallelbündel (21) am Umlenkspiegel (10) umgelenkt wird, und wobei das Strahlenbündel, wenn es ein paralleles strahlenbündel ist, am Umlenkspiegel (10) zum Kollimator (1) hin umgelenkt wird und auf den Kollimator trifft und das vom Kollimator kommende konvergierende Strahlenbündel durch das Durchgangsloch (11) hindurchläuft.

9. Optiksystem nach einem der obigen Ansprüche, **dadurch gekennzeichnet, daß** der Kollimator (1) als ein erster austauschbarer Kollimator ausgebildet ist, der durch einen zweiten Kollimator ersetzt werden kann, wobei der zweite Kollimator für einen anderen Wellenlängenbereich als der erste Kollimator eine derartige Farblängsfehlercharakteristik aufweist, daß für den anderen Wellenlängenbereich der durch die Optikeinheit (17) eingeprägte Farblängsfehler unverändert bleibt oder verringert wird.

10. Optiksystem nach einem der obigen Ansprüche, **dadurch gekennzeichnet, daß** alle Linsen (20, 21; 24, 25, 26) aus dem gleichen Material hergestellt sind.

11. Optiksystem nach einem der obigen Ansprüche, **dadurch gekennzeichnet, daß** die Optikeinheit selbst als weiterer Kollimator (28) ausgebildet ist, der zumindest eine zweite Linse (29) und einen zweiten gekrümmten Spiegel (30) ausweist, der den Strahlengang so faltet, daß das zugeführte Strahlenbündel die zweite Linse (29) zweimal durchläuft.

12. Optiksystem nach einem der obigen Ansprüche 1 bis 10, **dadurch gekennzeichnet, daß** das Optiksystem ein Laserscanningmikroskop oder ein Fluoreszenzkorrelationsspektroskop ist und der Kollimator im Anregungs- und/ oder Detektionsstrahlengang zur Anwendung kommt.

**Claims**

1. An optical system, in particular a microscope, comprising an optical unit (17) and a collimator (1), which collimator is arranged preceding or following the optical unit (17) in a beam path of the optical system, said optical unit (17) imposing a predetermined longitudinal chromatic aberration on a beam supplied to said beam path and said beam impinging on the collimator (1) as a diverging beam or a parallel beam and being converted by said collimator into a parallel beam or a converging beam, with the collimator (1) comprising at least one lens as well as a curved mirror (23, 27) which folds the beam path such that the supplied beam passes twice through the lens,
**characterized in that** the collimator (1) comprises the mirror (23; 27) as well as two or three lenses (20, 21; 24, 25, 26) for adjusting a desired longitudinal chromatic aberration characteristic of the collimator (1), wherein the lenses (20, 21; 24, 25, 26) as well as the mirror (23; 27) are displaceable along the optical axis (OA) of the collimator (1) so as to allow adjustment of said desired longitudinal chromatic aberration characteristic of the collimator (1)

2. The optical system as claimed in Claim 1, wherein the following conditions are fulfilled:

$$\left| 1/R6 + 0.3143/f + 0.0088 \right| < 0.001$$

$$\left| f1 - 0.1175 * f - 45.775 \right| < 0.1 * f$$

$$\left| f2 + 0.0133 * f + 14.621 \right| < 0.1 * f$$

$$\left| f3 - 0.0286 * f - 9.6999 \right| < 0.1 * f$$

$$\left| D2(\Delta s(=0)) - D2(\Delta s(<0)) - 0.0004 * f^2 + 0.2172 * f - 1.6243 \right| < 0.01 * f$$

$$\left|D2\big(\Delta s(>0)\big)-D2\big(\Delta s(<0)\big)-0.0011*f^{2}+0.4239*f-2.7441\right|<0.01*f$$

wherein R6 is the radius of curvature of the mirror (27),
f1, f2, and f3 are the focal lengths of the three lenses (24; 25; 26), respectively,
f is the focal length of the collimator (1),
D2 is the distance between the surfaces facing each other of the lenses (24, 25) of the collimator (1), which lenses are on the furthest distance from the mirror (27),
$\Delta s = s(\lambda) - s(546\ nm)$, wherein $s(\lambda)$ describes the physical intercept distance and $\Delta s(<0)$ represents $\Delta s$ having a value of less than 0, $\Delta s(=0)$ represents $\Delta s$ having a value of 0, and $\Delta s(>0)$ represents $\Delta s$ having a value of greater than 0.

3. The optical system as claimed in any one of the above Claims, **characterized in that** the longitudinal chromatic aberration characteristic of the collimator (1) is designed such that the longitudinal chromatic aberration imposed on the beam by the optical unit (17) remains unchanged or is reduced.

4. The optical system as claimed in any one of the above Claims, **characterized in that** the mirror (27) is provided as a rear-surface mirror on one side of one of the lenses (26).

5. The optical system as claimed in any one of the above Claims, **characterized in that** the collimator (1) comprises the mirror (23, 27) as the only mirror.

6. The optical system as claimed in any one of the above Claims, **characterized in that** both sides (2, 3) of one of the lenses (L) are provided as spherical surfaces.

7. The optical system as claimed in any one of the above Claims, **characterized in that** the beam (20) impinges on the collimator (1) such that the main ray of the beam (20) coincides with the optical axis (OA) of the collimator (1).

8. The optical system as claimed in Claim 7, **characterized in that** a deflecting mirror (10) comprising a through hole (11) is arranged preceding or following the collimator (1) in the beam path, wherein said beam (20), if it is a diverging beam, passes through the through hole (11) and impinges on the collimator (1), and the parallel beam (21) coming from the collimator is deflected by the deflecting mirror (10), and wherein the beam, if it is a parallel beam, is deflected by the deflecting mirror (10) to the collimator (1) and impinges on the collimator, and the converging beam coming from the collimator passes through the through hole (11).

9. The optical system as claimed in any one of the above Claims, **characterized in that** the collimator (1) is provided as a first exchangeable collimator, which may be replaced with a second collimator, said second collimator having a longitudinal chromatic aberration characteristic for a different wavelength range than the first collimator the longitudinal chromatic aberration characteristic being such that the longitudinal chromatic aberration imposed by the optical unit (17) remains unchanged or is reduced for the other wavelength range.

10. The optical system as claimed in any one of the above Claims, **characterized in that** all lenses (20, 21; 24, 25, 26) are produced from the same material.

11. The optical system as claimed in any one of the above Claims, **characterized in that** the optical unit itself is provided as a further collimator (28), comprising at least a second lens (29) and a second curved mirror (30), the latter folding the beam path such that the supplied beam passes twice through the second lens (29).

12. The optical system as claimed in any one of the Claims 1 to 10, **characterized in that** the optical system is a laser-scanning microscope or a fluorescence correlation spectroscope and the collimator is employed in the excitation beam path and/or detection beam path.

**Revendications**

1. Système optique, plus particulièrement microscope, avec une unité optique (17) et un collimateur (1), disposé en amont ou en aval de l'unité optique (17) dans un parcours optique du système optique, l'unité optique (17) imprimant au faisceau introduit dans le parcours optique une aberration chromatique longitudinale prédéterminée et le faisceau arrivant sur le collimateur (1) sous la forme d'un faisceau divergent ou parallèle et, à partir de celui-ci, est transformé en un faisceau parallèle ou convergent, le collimateur (1) comprenant au moins une lentille ainsi qu'un miroir incurvé (23, 27) qui infléchit le parcours optique de façon à ce que le faisceau introduit traverse deux fois la lentille, **caractérisé en ce que**

le collimateur (1) comprend le miroir (23 ; 27) ainsi que deux ou trois lentilles (20, 21 ; 24, 25, 26) pour le réglage d'une caractéristique d'aberration chromatique longitudinale souhaitée du collimateur (1), les lentilles (20, 21 ; 24, 25, 26) ainsi que le miroir (23 ; 27) pouvant coulisser le long de l'axe optique (OA) du collimateur (1), de façon à ce que la caractéristique d'aberration chromatique longitudinale souhaitée du collimateur (1) puisse être réglée.

2. Système optique selon la revendication 1, dans lequel les conditions suivantes sont respectées :

$$|1/R6 + 0,3143 \ / \ f + 0,0088| < 0,001$$

$$|f1 - 0,1175\text{*}f - 45,775| < 0,1\text{*}f$$

$$|f2 - 0,0133\text{*}f + 14,621| < 0,1\text{*}f$$

$$|f3 - 0,0286\text{*}f - 9,6999| < 0,1\text{*}f$$

$$|D2(\Delta s(=0)) - D2(\Delta s(<0)) - 0,0004\text{*}f^2 + 0,2172\text{*}f - 1,6243| < 0,01\text{*}f$$

$$|D2(\Delta s(>0)) - D2(\Delta s(<0)) - 0,0011\text{*}f^2 + 0,4239\text{*}f - 2,7441| < 0,01\text{*}f$$

R6 étant le rayon de courbure du miroir (27),
f1, f2 et f3 étant les distances focales des trois lentilles (24 ; 25, 26),
f étant la distance focale du collimateur (1),
D2 étant la distance entre les surfaces orientées l'une vers l'autre des lentilles (24, 25) du collimateur (1) les plus éloignées du miroir (27),
$\Delta s = s(\lambda) - s(546 \text{ mm})$, $s(\lambda)$ étant la distance focale arrière physique et $\Delta s(<0)$ étant un $\Delta s$ dont la valeur est inférieure à 0, $\Delta s(=0)$ étant un $\Delta s$ dont la valeur est égale à 0, et $\Delta s(>0)$ étant un $\Delta s$ dont la valeur est supérieure à 0.

3. Système optique selon l'une des revendications ci-dessus, **caractérisé en ce que** la caractéristique d'aberration chromatique longitudinale du collimateur (1) est conçue de façon à ce que l'aberration chromatique imprimée au faisceau par l'unité optique (17) reste inchangée ou est réduite.

4. Système optique selon l'une des revendications ci-dessus, **caractérisé en ce que** le miroir (27) est conçu comme un miroir de surface arrière sur un côté d'une lentille (26).

5. Système optique selon l'une des revendications ci-dessus, **caractérisé en ce que** le collimateur (1) comprend le miroir (23, 27) comme unique miroir.

6. Système optique selon l'une des revendications ci-dessus, **caractérisé en ce que** les deux côtés d'une des lentilles (L) sont conçus comme des surfaces sphériques.

7. Système optique selon l'une des revendications ci-dessus, **caractérisé en ce que** le faisceau (20) arrive sur le collimateur (1) de façon à ce que le rayon principal du faisceau (20) coïncide avec l'axe optique (OA) du collimateur (1).

**8.** Système optique selon la revendication 7, **caractérisé en ce qu'**un miroir de déviation (10) avec un trou de passage (11) est monté en amont ou en aval du collimateur (1) dans le parcours optique, le faisceau (20), s'il s'agit d'un faisceau divergent, traversant le trou de passage (11) et arrivant sur le collimateur (1) et le faisceau parallèle (21) provenant du collimateur étant dévié au niveau du miroir de déviation (10) et le faisceau, s'il s'agit d'un faisceau parallèle, étant dévié au niveau du miroir de déviation (10) en direction du collimateur (1) et arrivant sur le collimateur et le faisceau convergent provenant par le collimateur traversant le trou de passage (11).

**9.** Système optique selon l'une des revendications ci-dessus, **caractérisé en ce que** le collimateur (1) est conçu comme un collimateur interchangeable, qui peut être remplacé par un deuxième collimateur, le deuxième collimateur comprenant une caractéristique d'aberration chromatique longitudinale pour un domaine de longueurs d'ondes différent du premier collimateur, de façon à ce que, pour cet autre domaine de longueurs d'ondes, l'aberration chromatique longitudinale imprimée par l'unité optique (17) reste inchangée soit réduite.

**10.** Système optique selon l'une des revendications ci-dessus, **caractérisé en ce que** toutes les lentilles (20, 21 ; 24, 25, 26) sont constituées du même matériau.

**11.** Système optique selon l'une des revendications ci-dessus, **caractérisé en ce que** l'unité optique elle-même est conçue comme un autre collimateur (28) qui comprend au moins une deuxième lentille (29) et un deuxième miroir incurvé (30) qui infléchit le parcours optique de façon à ce que le faisceau introduit traverse deux fois la deuxième lentille (29).

**12.** Système optique selon l'une des revendications 1 à 10, **caractérisé en ce que** le système optique est un microscope à balayage laser ou un spectroscope de corrélation de fluorescence et le collimateur est utilisé dans un parcours optique d'excitation et/ou de détection.

Fig. 1

Fig. 2

Fig. 3

Fig.4

Fig.5

Fig.6

Fig.7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10217544 A1
- US 5303001 A